# EUROPÄISCHE PATENTSCHRIFT

(11) **EP 2 469 175 B1**
(45) Veröffentlichungstag und Bekanntmachung des Hinweises auf die Patenterteilung: **21.02.2018**
(21) Anmeldenummer: 10401225.7
(22) Anmeldetag: 23.12.2010
(51) Int. Cl.: F24C 15/00, F24C 15/32

(54) **Gargerät**
Cooking device
Appareil de cuisson

(43) Veröffentlichungstag der Anmeldung: 27.06.2012
(60) Teilanmeldung: 17208065.7
(73) Patentinhaber: Miele & Cie. KG, 33332 Gütersloh (DE)
(72) Erfinder: Dittrich, Hartmut, 32257, Bünde (DE); Metz, Thomas, 32257, Bünde (DE)

(56) Entgegenhaltungen:
- EP-A1- 1 847 203
- JP-A- 2005 016 743
- US-A1- 2010 199 860
- US-B1- 6 237 469

## Beschreibung

Die vorliegende Erfindung betrifft ein Gargerät mit wenigstens einem Garraum, der wenigstens im Wesentlichen über wenigstens eine dem Garraum zugeordnete Dampfquelle beheizbar ist. Insbesondere betrifft die Erfindung ein Dampfgargerät, welches wenigstens im Wesentlichen über wenigstens eine dem Garraum zugeordnete Dampfquelle beheizbar ist. Ein solches als Dampfgargerät ausgeführtes Gargerät kann neben einer oder mehreren Dampfquellen auch noch weitere konventionelle Heizquellen aufweisen.

Typische Gargeräte, die über eine Dampfquelle beheizbar sind, weisen einen Temperaturfühler im Garraum auf, um die Garraumtemperatur zu erfassen und um den Garprozess in Abhängigkeit von der Garraumtemperatur zu steuern. In der Aufheizphase wird der Dampfquelle regelmäßig maximale Heizleistung zugeführt, um zunächst einen möglichst starken Temperaturanstieg in dem Garraum zu bewirken. Nachdem die vorgesehene Gar- oder Betriebstemperatur erreicht wird, wird regelmäßig die Heizleistung der Dampfquelle bzw. der Dampfquellen reduziert, damit überschüssiger Dampf nicht aus der Dampfauslassöffnung des Gargerätes austritt und zu einer unerwünschten Befeuchtung der Umgebung führt. Solche drucklosen Dampfgarer, die beispielsweise mit Dampf bei 100 Grad C arbeiten, können im Garraum keine Temperaturen größer 100 Grad C erzeugen. In vielen Fällen ist es vorteilhaft, Lebensmittel möglichst nahe an 100 Grad C zu garen, wobei es bei Dampfüberschuss im Garraum aber zu unerwünschtem Dampfaustritt aus dem Gargerät kommen kann. Generell ist es schwierig zu detektieren, ob der Dampferzeuger zu viel Dampf produziert, der dann unerwünschter Weise nach außen austritt. Natürlich sind gleichermaßen Temperaturverläufe erwünscht, die unter 100 Grad C liegen, damit das Lebensmittel sehr schonend gegart wird. Relevanter Stand der Technik ist in den Dokumenten US6237469 und EP1847203 zu finden. Manche Dampfgargeräte arbeiten deshalb z. B. 2 oder 3 Grad C unterhalb des gemessenen Siedepunktes, der von der geodätischen Höhe des Aufstellortes abhängt, da der Siedepunkt von Wasser von dem herrschenden Umgebungsdruck abhängt. Der Siedepunkt kann zur Einstellung des Betriebspunkts gemessen werden, auch um Bauteiltoleranzen auszugleichen.

Um möglichst schnell die vorgesehenen Betriebstemperatur zu erreichen, sind Gargeräte, deren Garraum mit Dampf beheizt wird, oftmals mit zwei oder mehr Heizkreisen ausgerüstet. Zu Beginn des Garvorgangs werden möglichst viele Heizkreise aktiviert, um den Garraum möglichst schnell auf die vorgesehene Gartemperatur aufzuheizen. Wenn der Garraum und die darin vorgesehene Speise sich auf die Gartemperatur erwärmt hat, sinkt der Leistungsbedarf erheblich, sodass die in den Garraum eingebrachte Heizleistung entsprechend reduziert werden kann, um den unerwünschten Austritt von überschüssigen Dampf und einen unnötigen Energieverbrauch zu vermeiden.

Eine Möglichkeit zur Vermeidung von Dampfaustritt ist es, die Betriebstemperatur soweit zu reduzieren, dass die Siedetemperatur weitaus deutlicher unterschritten wird. Ein deutliches Unterschreiten der Siedetemperatur aber führt zu einer entsprechenden Verlängerung des Garprozesses.

Wenn die Betriebstemperatur hingegen höher gewählt wird, können die bekannten Mess- und Regelverfahren zum Betreiben solcher Gargeräte zu einem sogenannten "Atmen" des Garraumes führen. Ein "Atmen" des Garraumes rührt daher, dass bei ausgeschalteter Dampfquelle der im Garraum kondensierende Dampf dort zu einem Unterdruck führt, sodass Luft aus der Umgebung und somit Sauerstoff in den Garraum gelangt. Der eintretende Sauerstoff kann an der zu garenden Speise zu unschönen Verfärbungen führen. Außerdem sorgt die von außen in den Garraum eintretende Luft zu einer örtlich inhomogenen Abkühlung des Garraumes. Da der Temperaturfühler im Garraum die Garraumtemperatur durch Konvektion annimmt, kann es relativ lange dauern, bis der Temperaturfühler den Abfall der Temperatur im Garraum registriert. Im Anschluss daran wird die Dampfquelle wieder aktiviert, um die Temperatur im Garraum wieder anzuheben. Um aber die Temperatur von beispielsweise 95 Grad C auf 97 Grad C anzuheben, muss eine erheblich Menge von z. B. 100 Grad C heißem Dampf produziert werden und ein erheblicher Anteil des an sich energetisch sehr hochwertigen Dampf-Luftgemisches in dem Garraum durch den reinen Dampf verdrängt werden. Das führt zu einem relativ hohen Energieverbrauch und zu einer unter Umständen deutlichen Anhebung der Feuchtigkeit in der Umgebung des Gargerätes.

Es ist deshalb die Aufgabe der vorliegenden Erfindung, ein Gargerät zur Verfügung zu stellen, bei dem die vorgesehene Gartemperatur hoch gewählt zuverlässiger eingehalten werden kann und welches im Betrieb einen geringeren Energieverbrauch ermöglicht.

Diese Aufgabe wird gelöst durch ein Gargerät mit den Merkmalen des Anspruchs 1 und durch ein Verfahren zum Betreiben eines Gargerätes mit den Merkmalen des Anspruchs 10. Bevorzugte Weiterbildungen der Erfindung sind Gegenstand der jeweiligen Unteransprüche. Weitere Vorteile, Merkmale und Eigenschaften der vorliegenden Erfindung ergeben sich aus dem Ausführungsbeispiel.

Das erfindungsgemäße Gargerät verfügt über wenigstens einen Garraum, der wenigstens im Wesentlichen über wenigstens eine dem Garraum zugeordnete Dampfquelle beheizbar ist. An dem Garraum ist wenigstens eine Dampfauslassöffnung vorgesehen, über welche der Garraum mit der Umgebung in Verbindung steht. Wenigstens ein Temperaturfühler ist zur Erfassung einer charakteristischen Garraumtemperatur vorgesehen. Dabei ist der Temperaturfühler in dem Strömungsweg eines durch die Dampfauslassöffnung durchtretenden Gasstromes angeordnet. Im Weiteren ist wenigstens eine Dampfeinlassöffnung vorgesehen, um den von der Dampfquelle erzeugten Dampf in den Garraum einbringen zu können, vorzugsweise umfasst der Garraum mehrere Dampfeinlassöffnungen, die auf die einzelnen Einschubebenen des Garraumes verteilt sind. Des Weiteren sind der Temperaturfühler und die Dampfeinlassöffnungen und die Dampfauslassöffnungen an einer gemeinsamen Baueinheit vorgesehen, wobei die gemeinsame Baueinheit an der Rückwand des Garraumes angeordnet ist. Hierbei wird eine vereinfachte Montage, bzw. Wartung ermöglicht. Zudem kann die Verwendung einer kompakten Baugruppe ein homogenes äußeres Design erreicht werden.

Das erfindungsgemäße Gargerät hat viele Vorteile. Das erfindungsgemäße Gargerät ermöglicht einen einfachen und kostengünstigen Aufbau, wobei die angestrebte Gartemperatur gut und zuverlässig eingehalten werden kann, ohne dass aufwändige und teure Sensoren verwendet werden müssen.

Dadurch, dass der Temperaturfühler in dem Strömungsweg eines durch die Durchlassöffnung durchtretenden Gasstromes angeordnet ist, wird der Temperaturfühler stärker mit Änderungen des im Garraum vorherrschenden Klimas beaufschlagt als es im Stand der Technik der Fall ist. Wird der Temperaturfühler irgendwo im Garraum angeordnet, so vergeht zum Teil eine sehr erhebliche Zeitdauer, bis der Temperaturfühler im Garraum Veränderungen detektiert. Bei dem erfindungsgemäßen Gargerät ist der Temperaturfühler im Strömungsweg des Garraums angeordnet, der durch die Dampfauslassöffnung durchtritt. Das bedeutet, dass bei Dampfüberschuss der Temperaturfühler direkt durch den Dampf, der über den Strömungsweg durch die Dampfauslassöffnung den Garraum verlässt, aufgeheizt wird. Im umgekehrten Falle, wenn durch kondensierenden Dampf ein Unterdruck im Garraum entsteht und von außen über die Dampfauslassöffnung Luft aus der Umgebung angesaugt wird, wird der Temperaturfühler direkt mit der in den Garraum einströmenden (kalten) Luft beaufschlagt. Dadurch wird der Wärmeübergang von der strömenden Luft an den Temperaturfühler erheblich verbessert, sodass bei im Vergleich zum Stand der Technik gleichbleibenden Sensor eine deutlich erhöhte Regelgenauigkeit möglich ist.

Außerdem wird der Temperaturfühler bei Dampfüberschuss und aus dem Garraum austretenden Dampf mit dem heißen Dampf beaufschlagt, während er bei Unterdruck im Garraum mit der kalten Umgebungsluft beaufschlagt wird, sodass jeweils eine möglichst große Temperaturdifferenz an dem Temperaturfühler anliegt. Dies führt zu einem besseren Ansprechverhalten des Temperaturfühlers, sodass die vorgegebene Garraumtemperatur besser eingehalten werden kann. Außerdem wird die Energieeffizienz verbessert, da frühzeitiger auf Temperaturveränderungen reagiert und somit weniger überschüssiger Dampf produziert werden kann.

In allen Ausgestaltungen ist es möglich, dass der Temperaturfühler innerhalb des Garraumes oder auch außerhalb des Garraumes angeordnet ist. Vorzugsweise ist der Temperaturfühler wenigstens in der Nähe der Dampfauslassöffnung angeordnet. Im Falle, dass der Temperaturfühler näher am bzw. im Garraum angeordnet ist, erfolgt das Ansprechen des Temperaturfühlers auf das Eindringen von kühler Luft in den Garraum insgesamt verzögernd, da trotz des Eindringens der kühlen Luft von Außen, der aufgeheizte Garraum nur langsam abkühlt. Eine stromabwärts und außerhalb des Garraumes erfolgende Anordnung des Temperaturfühlers, beispielhaft in einem isolierten mit dem Garraum in Verbindung stehenden Seitenkanal, bietet den Vorteil, dass mittels des im Seitenkanal angeordneten Temperaturfühlers, frühzeitig eine Zufuhr von kühler Außenluft sensierbar ist, ohne dass diese bereits in den Garraum gelangt und den aufgeheizten Garraum ungewollt abkühlt, welches eine verschlechterte Energiebilanz für den Betrieb des Gargerätes bedeutet.

Das Gargerät kann als Dampfgargerät ausgebildet sein und ist jedenfalls als druckloses Gargerät ausgebildet. Es ist möglich, dass wenigstens eine Dampfquelle oder mehrere Dampfquellen innerhalb des Garraumes angeordnet ist bzw. sind. Es ist aber auch möglich und bevorzugt, wenigstens eine Dampfquelle oder alle Dampfquellen außerhalb des Garraumes anzuordnen.

Besonders bevorzugt ist der Temperaturfühler in der Dampfauslassöffnung angeordnet. Das bedeutet, dass der Temperaturfühler einerseits direkten Kontakt zu dem Garraum aufweist, während er andererseits direkt von der durch die Dampfauslassöffnung durchtretenden Strömung beaufschlagt wird.

In bevorzugten Ausgestaltungen trennt die Dampfauslassöffnung den Garraum von einem Zwischenraum, der wiederum mit der Umgebung in Verbindung steht. Der Zwischenraum wird während des Garprozesses eine Temperatur annehmen, die zwischen der Umgebungstemperatur und der Garraumtemperatur liegt. Dadurch wird eine mögliche Abkühlung des Garraums durch von außen eintretende Luft reduziert.

Es ist bevorzugt, dass mehrere Dampfeinlassöffnungen auf mehreren Ebenen höhenversetzt angeordnet sind. Dabei können wenigstens zwei Ebenen separat ansteuerbar sein. Möglich ist es, dass die Dampfeinlassöffnungen paarweise auf jeder Ebene vorgesehen sind. Vorzugsweise sind die Dampfeinlassöffnungen an der gemeinsamen Baueinheit vorgesehen und seitlich voneinander weg ausgerichtet. Dabei ist es besonders bevorzugt, dass die Dampfeinlassöffnungen den Dampf in den Garraum entlang einer Wandung des Garraumes in den Garraum einblasen, um eine möglichst homogene Mischung der Garraumatmosphäre zu erzielen. Dadurch kann ein punktuelles Einwirken von Dampf auf das Gargut vermieden werden, sodass das Gargut homogen gegart wird und keine oder nur geringe örtliche Unterschiede vorliegen. Ein punktuelles Einwirken kann zu örtlich unterschiedlichen Garergebnissen führen.

Vorzugsweise ist wenigstens eine Dampfeinlassöffnung als Dampfdüse ausgebildet, an der insbesondere eine Strömungsverengung vorgesehen ist, um die Strömungsgeschwindigkeit des in den Garraum einströmenden Dampfes zu erhöhen. Dadurch wird eine besonders gute Durchmischung erzielt.

Das erfindungsgemäße Verfahren dient zum Betreiben eines Gargeräts mit wenigstens einem Garraum, wobei der Garraum im Wesentlichen über wenigstens eine dem Garraum zugeordnete Dampfquelle beheizt wird. Der Garraum ist über wenigstens eine Dampfauslassöffnung mit der Umgebung verbunden und ein Temperaturfühler erfasst eine charakteristische Garraumtemperatur. Dabei ist der Temperaturfühler in dem Strömungsweg eines durch die Durchlassöffnung durchtretenden Gasstromes angeordnet, um Temperaturänderungen zu erfassen.

Das erfindungsgemäße Verfahren bietet ebenfalls erhebliche Vorteile, da es mit einfachen Mitteln eine genaue und reproduzierbare Einstellung der Gartemperatur erlaubt.

Besonders bevorzugt wird die Heizleistung der wenigstens einen Dampfquelle in Abhängigkeit von der charakteristischen Garraumtemperatur gesteuert.

Insbesondere kann die Heizleistung auch in Abhängigkeit von den zeitlichen Schaltvorgängen gesteuert werden, um die Anzahl der Schaltvorgänge zu verringern. Auch dadurch kann ein "Atmen" des Garraumes weiter reduziert werden. Die Reduktion und/oder Erhöhung der Heizleistung kann stufenweise oder kontinuierlich erfolgen.

Die Einstellung zur Reduktion oder Erhöhung der Heizleistung kann durch das Zu- oder Abschalten einzelner Heizkörper oder Dampfquellen erfolgen, kann aber auch durch ein getaktetes Betreiben eines oder mehrerer Heizkörper erfolgen.

Weitere Vorteile und Merkmale der vorliegenden Erfindung ergeben sich aus dem Ausführungsbeispiel, welches im Folgenden mit Bezug auf die beiliegenden Figuren erläutert wird.

In den Figuren zeigen:
- Figur 1: eine schematische Voransicht eines erfindungsgemäßen Gargerätes;
- Figur 2: eine vergrößerte schematische Vorderansicht der gemeinsamen Baueinheit des Gargeräts gemäß Figur 1;
- Figur 3: eine stark schematische Querschnittsansicht des Gargeräts gemäß Figur 1;
- Figur 4: eine geschnittene Draufsicht auf das Gargerät gemäß Figur 1;
- Figur 5: den Temperaturverlauf über der Zeit für zwei unterschiedliche Beladungen des Garraums; und
- Figur 6: den zeitlichen Temperatur- und Heizverlauf für die beiden unterschiedlichen Beladungsmengen gemäß Figur 1.

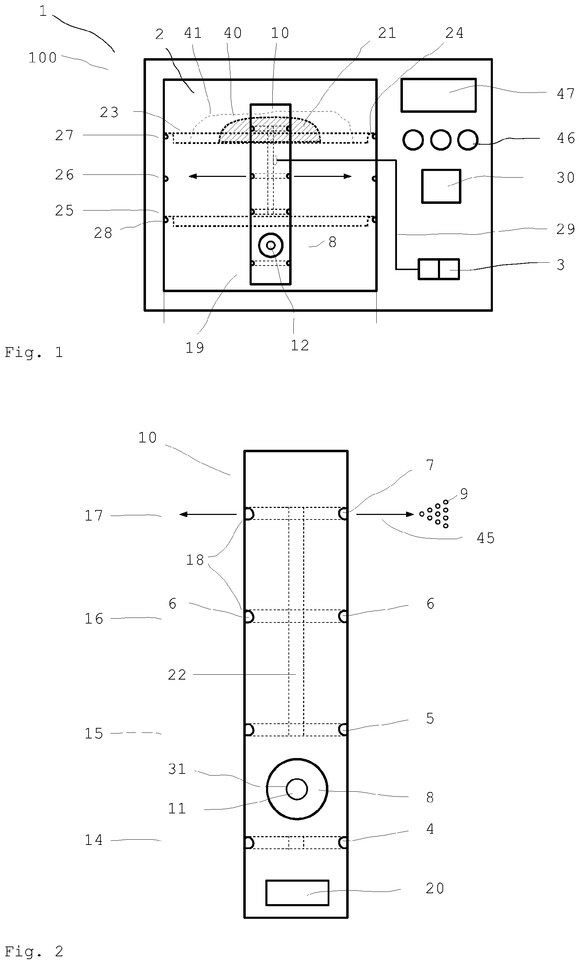

Mit Bezug auf die beiliegenden Figuren 1 bis 6 wird im Folgenden ein Ausführungsbeispiel eines erfindungsgemäßen Gargeräts 1 beschrieben, welches hier als Dampfgargerät 100 ausgeführt ist und welches sowohl als Einbaugerät als auch als alleinstehendes Gargerät ausgebildet sein kann.

In Figur 1 ist das Gargerät 1 in einer stark schematischen und vereinfachten Darstellung abgebildet. Das Gargerät 1 weist einen Garraum 2 auf, der wenigstens teilweise über Dampf 9 wenigstens einer Dampfquelle 3 beheizbar ist. Dabei kann die Dampfquelle 3, wie in Figur 1 angedeutet, über mehrere Heizquellen verfügen, die nach Bedarf einzeln oder auch gesamt ansteuerbar sind.

Die Dampfquelle 3 leitet den erzeugten Dampf 9 (vgl. Figur 2) über Dampfeinlassöffnungen 4 bis 7 in den Garraum 2 ein. Eine zentrale Dampfauslassöffnung 8 ist mit der Umgebung 50 des Gargerätes 1 verbunden, sodass das Gargerät 1 bzw. der Dampfgargerät 100 als drucklos arbeitendes System ausgeführt ist. Durch die Auslassöffnung 8 kann überschüssiger Dampf 9 aus dem Inneren des Garraums 2 nach außen abgeführt werden oder aber es kann Luft aus der Umgebung 50 angesaugt werden, wenn im Inneren des Garraums 2 ein Unterdruck vorherrscht, wenn dort beispielsweise vorhandener Dampf 9 kondensiert und nicht genug Dampf 9 durch die Dampfquelle 3 nachgeliefert wird. Es können auch mehrere Dampfauslassöffnungen 8 vorgesehen sein.

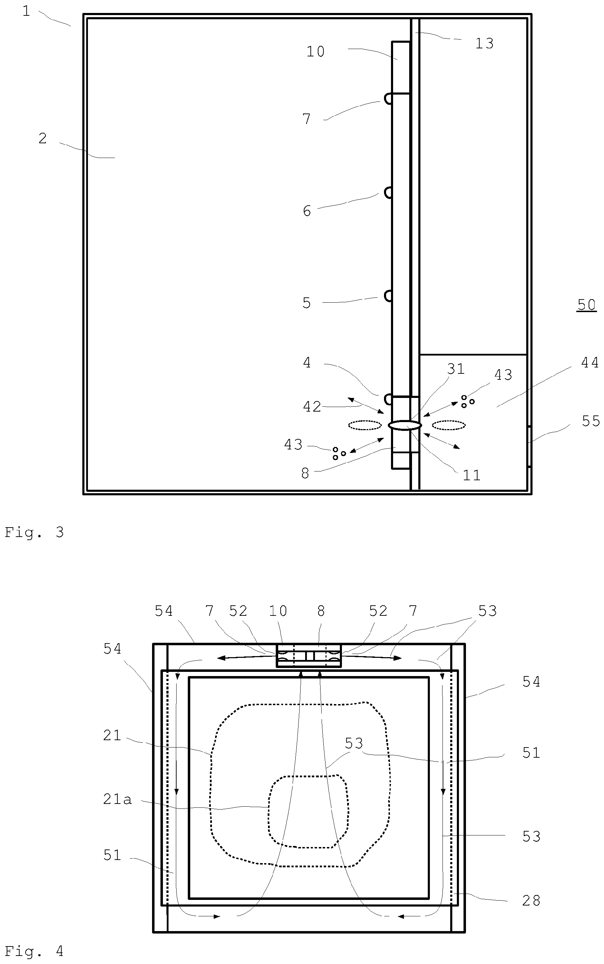

Figur 2 zeigt die gemeinsame Baueinheit 10 in vergrößerter Darstellung, die an der Rückwand 13 (vgl. Fig. 3) des Garraumes 2 austauschbar angeordnet ist. An der gemeinsamen Baueinheit 10 sind hier die insgesamt acht Dampfeinlassöffnungen 4 bis 7 vorgesehen, die auf vier Ebenen 14 bis 17 jeweils paarweise angeordnet sind. Jeweils zwei Dampfeinlassöffnungen 4, 5, 6 und 7 sind paarweise an der Baueinheit 10 vorgesehen und sind so ausgebildet, dass der aus dem Dampfeinlassöffnungen 4 bis 7 austretende Dampf 9 in etwa entgegengesetzte Richtungen gelenkt wird, wie die eingezeichneten Strahlrichtungen 45 an den Dampfeinlassöffnungen 7 zeigen. Jeweils zwei Dampfeinlassöffnungen 4 bis 7 sind auf jeder Ebene 14 bis 17 vorgesehen.

Die Dampfauslassöffnung 8 ist hier zentral zwischen der untersten Ebene 14 und der zweituntersten Ebene 15 und somit zwischen den Dampfeinlassöffnungen 4 und 5 angeordnet.

Zentrisch ist innerhalb der Dampfauslassöffnung 8 eine Sensoreinrichtung 31 angeordnet, die einen Temperaturfühler 11 umfasst. Durch die Anordnung des Temperaturfühlers 11 innerhalb der Dampfauslassöffnung 8 wird sichergestellt, dass durch die Dampfauslassöffnung 8 strömendes Gas den Temperaturfühler 11 mit der jeweils vorherrschenden Temperatur wenigstens teilweise beaufschlagt, sodass durch Gasaustritt oder Gaseintritt hervorgerufene Temperaturänderungen schnell und sicher durch den Temperaturfühler 11 erfasst werden können.

Wie der Darstellung nach Figur 1 entnommen werden kann, sind zwischen den Ebenen 14, 15, 16 und 17 drei Garebenen 25, 26 und 27 vorgesehen. Dabei ist in Figur 1 an den Garebenen 25 und 27 jeweils ein als Garblech ausgeführter Garbehälter 23 angeordnet. Der Garbehälter 23 ist an den Garebenen 25 und 27 gestrichelt eingezeichnet. Zusätzlich kann auch an der Garebene 26 ein entsprechender Garbehälter 23 angeordnet werden.

Die Anordnung der Garebenen 25, 26 und 27 ist derart, dass jede Garebene 25 bis 27 jeweils von oben und unten mit Dampf 9 der einen Dampfquelle 3 oder mehrerer Dampfquellen 3 beaufschlagbar ist. Dabei wird die unterste Garebene 25 durch Dampf aus den Dampfeinlassöffnungen 4 und 5 beaufschlagt und die Garebene 26 wird von unten durch Dampf 9 aus den Dampfeinlassöffnungen 5 und von oben durch Dampf 9 aus den Dampfeinlassöffnungen 6 beaufschlagt. Die Garebene 27 wird wiederum von oben durch Dampf 9 aus den Dampfeinlassöffnungen 7 und von unten durch Dampf 9 aus den Dampfeinlassöffnungen 6 beaufschlagt.

Jeder Garbehälter 23 ist hier etwa wannenförmig ausgebildet und weist einen Aufnahmerand 24 auf, der auf Haltern 28 des Garraumes 2 aufliegt. Die Halter 28 definieren die Garebenen 25-27 und stützen die Garbehälter 23 nach unten ab. Durch den Aufnahmerand 24 des Garbehälters 23 und die Anordnung der Dampfeinlassöffnungen 4 bis 7 wird es erreicht, dass in den Garraum 2 eintretender Dampf 9 durch die zwischen dem Garbehälter 23 und den Wandungen 54 des Garraums 2 gebildeten Führungskanäle bzw. Dampfkanäle 51 geleitet wird. Der hinten an der Rückwand 13 aus der Baueinheit 10 austretende Dampf wird an der Rückwand 13 entlang geleitet und entlang der Seitenwände bis zum vorderen Ende des Garraumes 2 geführt, wo er vorne um den Garbehälter 23 herumtritt und schließlich in erheblichem Maße von vorn auf das Gargut 21 geleitet wird. Zum Schluss erreicht die Strömung die Dampfauslassöffnung 8, sodass sichergestellt wird, dass das kälteste Gas aus dem Garraum 2 abgeleitet wird.

Auf der Garebene 27 sind schematisch zwei unterschiedliche Beladungen 40 und 41 mit einer zu garenden Speise bzw. einem Gargut 21 dargestellt.

Das in Figur 1 dargestellte Gargerät 1 ist mit einer Steuereinrichtung 30, mit Bedienknöpfen 46 und einer Anzeige 47 ausgerüstet, um den Betriebszustand und/oder das Geräteprogramm und weitere Informationen auszugeben. Die Dampfquelle 3 bzw. die Dampfquellen 3 sind über eine oder mehrere Dampfleitungen 29 mit den jeweiligen Dampfeinlassöffnungen 4 bis 7 verbunden.

Die einzelnen Dampfeinlassöffnungen 4 bis 7 sind jeweils als Dampfdüse 18 ausgebildet, um die Strömungsgeschwindigkeit des aus den Dampfeinlassungen 4 bis 7 ausgegebenen Dampfs 9 zu erhöhen und damit die Durchmischung mit der Garraumatmosphäre zu verbessern.

Die Dampfeinlassöffnungen 5, 6 und 7 sind über eine gemeinsame Dampfführung 22 miteinander verbunden. Die Dampfeinlassöffnungen 4 sind separat ansteuerbar. Möglich ist es auch, dass die Dampfeinlassöffnungen 5, 6 und 7 jeweils separat ansteuerbar sind.

Zum Beginn eines Garprozesses werden alle Einlassöffnungen 4 bis 7 mit maximal vorgesehener Dampfleistung beaufschlagt. Im weiteren Prozess wird die zugeführte Dampfleistung reduziert. Schließlich wird nur durch die unteren Dampfeinlassöffnungen 4 im unteren Bereich 19 Dampf in den Garraum 2 eingeleitet. Im unteren Bereich 19 ist auch die Dampfauslassöffnung 8 vorgesehen.

Wenn nur durch die Dampfeinlassöffnungen 4 im unteren Bereich 19 des Garraums 2 Dampf 9 eingeleitet wird, vermischt dieser mit der im Garraum 2 vorhandenen Luft zu einem Dampf-Luftgemisch, wobei sukzessive der heiße Dampf 9 den Garraum 2 von oben nach unten durchspült, da zunächst der Dampf automatisch in die oberen Bereiche des Garraums 2 geleitet wird, da heißer Dampf 9 leichter wie Luft ist. Die im unteren Bereich 19 vorgesehene Dampfauslassöffnung 8 wiederum führt im Wesentlichen die kühlste im Garraum 2 vorhandene Atmosphäre nach außen ab.

Zur Beleuchtung des Garraums 2 und/oder der Baueinheit 10 kann eine Leuchtquelle 20 in dem Garraum 2 und insbesondere in der Baueinheit 10 integriert sein.

Figur 3 zeigt einen stark schematischen Querschnitt durch das Gargerät 1 nach Figur 1. Deutlich zu erkennen ist die an der Rückwand 13 des Garraums 2 angeordnete Baueinheit 10.

Die Austrittsöffnungen der seitlich ausstrahlenden Dampfeinlassöffnungen 4 bis 7 sind in der Darstellung gemäß Figur 3 gut zu erkennen.

Im unteren Bereich 19 des Garraums 2 ist die Dampfauslassöffnung 8 angeordnet, so wie es schon den Figuren 1 und 2 zu entnehmen war. Der Temperaturfühler 11 ist hier zentrisch in der Dampfauslassöffnung 8 angeordnet.

Wie es in Figur 3 gestrichelt dargestellt ist, kann der Temperaturfühler 11 auch (vollständig) innerhalb des Garraums 2 oder (vollständig) außerhalb des Garraums 2 in beispielsweise dem Zwischenraum 44 angeordnet werden. Der Temperaturfühler 11 ist dabei innerhalb des Strömungsweges 42 des Gasstroms 43 durch die Dampfauslassöffnung 8 angeordnet. Dadurch, dass der Temperaturfühler 11 innerhalb des Strömungsweges 42 angeordnet ist, wird der Temperaturfühler 11 in jedem Fall mit dem durch die Dampfauslassöffnung 8 durchtretenden Gasstrom 43 beaufschlagt.

Wenn dieser Gasstrom 43 beispielsweise bei Austritt von Dampfüberschuss eine erhöhte Temperatur oder bei Lufteintritt von außen eine niedrigere Temperatur als die Garraumtemperatur aufweist, so registriert der Temperaturfühler 11 solche Temperaturänderungen direkt. Dadurch wird eine erheblich feinere Steuerung der Heizleistung und somit der Garraumtemperatur ermöglicht. Das "Atmen" des Garraumes wird weitestgehend vermieden. In Versuchen hat sich herausgestellt, dass zeitliche und örtliche Temperaturunterschiede innerhalb des Garraumes 2 weitestgehend vermieden und gegebenenfalls sogar nicht mehr erfasst werden. Optisch unschöne Verfärbungen auf Lebensmitteln werden vermieden.

Zum Austritt und zum Gasaustausch mit der Umgebung 50 sind Öffnungen 55 in dem Zwischenraum 44 vorgesehen.

In Figur 4 ist ein stark schematischer Querschnitt durch den Garraum 2 eines Gargeräts 1 bzw. Dampfgargeräts 100 etwa in Höhe der Dampfauslassöffnungen 7 kurz oberhalb der Garebene 27 aus Figur 1 dargestellt.

Die Dampfauslassöffnungen 7 sind an der Baueinheit 10 am rückwärtigen Ende des Garraumes 2 angeordnet und weisen, wie hier im Querschnitt erkennbar, Verengungen 52 am Austrittsquerschnitt auf, sodass die Dampfströmung beim Austritt aus den Dampfeinlassöffnungen 7 beschleunigt wird. Dabei wirken die Dampfeinlassöffnungen 7 als Dampfdüsen 18. Dadurch wird eine besonders intensive Vermischung des durch die Dampfeinlassöffnungen 7 in den Garraum 2 eintretenden Dampfes 9 mit der dort vorherrschenden Atmosphäre erzielt. Auch die anderen Dampfeinlassöffnungen 4 bis 6 sind hier entsprechend ausgebildet.

Die Dampfströmung 53, die aus dem Dampfeinlassöffnungen 7 in den Garraum 2 eintritt, wird etwa tangential, d.h. etwa parallel zur Rückwand 13 in den Garraum 2 eingeblasen, wobei ein leichter Winkel zur Rückwand 13 vorliegen kann. Die Rückwand bildet hier eine Wandung 54, an der der Dampfstrom entlang geführt wird. Zusammen mit dem Garbehälter 23 bilden die Rückwand 13 und die seitlichen Wandungen 54 Dampfkanäle 51, durch die der eintretende Dampf 9 geleitet wird. Insgesamt ergibt sich in starker Näherung ein Strömungsverhalten, wie es durch die mit Pfeilen gekennzeichnete Dampfströmung 53 eingezeichnet ist. Die Dampfströmung 53 nimmt dabei den Weg an der hinteren Rückwand entlang bis zur Seitenwand, von dort bis zum vorderen Ende des Garraumes, wird dort wiederum umgelenkt und gelangt über die Garebene 27 wieder zurück zur Rückwand 13.

Durch diese Anordnung wird für eine homogene Verteilung des Dampfes 9 innerhalb des Garraumes 2 gesorgt, insbesondere da der Dampf 9 insbesondere zu Beginn des Garvorganges nicht nur über die oberen Dampfeinlassöffnungen 7, sondern über alle Dampfeinlassöffnungen 4, 5, 6 und 7 in den Garraum 2 eingeleitet wird.

In Figur 4 sind zwei unterschiedliche Beladungen 40 und 41 schematisch mit auf dem Garbehälter 23 eingezeichnet.

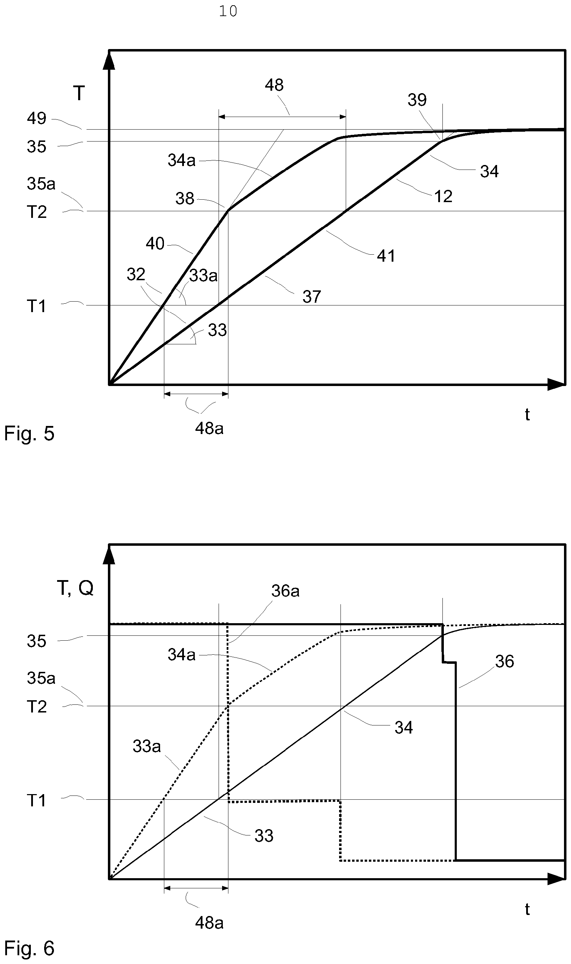

Figur 5 zeigt den Temperaturverlauf zweier unterschiedlicher Beladungen 40 und 41 über der Zeit nach dem Beginn des Garvorganges. Dabei wird in beiden Fällen zunächst mit maximal vorgesehener Dampfleistung beheizt. Es ergibt sich zunächst in genäherter Darstellung ein linearer Anstieg der Temperatur mit der Zeit, wobei der Anstieg bei der geringeren Beladung 40 steiler als bei der höheren Beladung 41 ist. Das wird durch die höhere Wärmekapazität der höheren Beladung 41 verursacht, da eine größere Wärmekapazität aufgewärmt werden muss.

Es hat sich als vorteilhaft herausgestellt, dass der Temperaturverlauf zwischen einer ersten Temperatur T1 und einer zweiten Temperatur T2 für die Steuerung des Aufheizvorganges verwendet wird. Eine geeignete Temperatur T1 ist beispielsweise 40 Grad C und eine geeignete Temperatur T2 kann beispielsweise 70 Grad C sein. Je nach herrschenden Außentemperaturen können auch höhere Temperaturen T1 wie z.B. 50 oder 55 Grad C gewählt werden. Auch eine höhere Temperatur T2, wie z.B. 75 oder 80 Grad ist möglich.

Die Zeitdauer 48 bzw. 48a, die genötigt wird, bis die charakteristische Temperatur 12 in dem Garraum von der Temperatur T1 auf die Temperatur T2 gestiegen ist, kann dazu verwendet werden, ein Maß 33 bzw. 33a für die Beladung in dem Garraum 2 zu bestimmen. Gegebenenfalls kann die benötigte Zeit auch als direktes Maß für die Beladung verwendet werden. Je größer die Zeitspanne ist, desto größer ist die Beladung im Garraum 2. So ergibt sich in anschaulicher Weise aus der Darstellung gemäß Figur 5 schon, dass die zur Zeitdauer 48a gehörende Beladung 33a geringer ist als die zur Zeitdauer 48 gehörende Beladung 33. Neben oder anstelle der Zeitdauer, die benötigt wird, um den Garraum von einer Temperatur T1 auf eine Temperatur T2 zu erhitzen, kann auch die örtliche Steigung bei einer oder mehreren Temperaturen verwendet werden, um ein Maß 33 bzw. 33a für die Beladung zu erhalten.

Der zeitliche Temperaturverlauf 34 bzw. 34a hängt von der Beladung 40 bzw. 41 und gegebenenfalls unterschiedlichen Speisen 21 bzw. 21a ab.

Nach Erreichung einer zweiten Temperatur T2 oder bei Erreichen einer Temperatur 38, die auch als Schwelltemperatur bezeichnet werden kann, kann in Fällen einer relativ geringen Beladung 40 die Heizleistung und somit die zugeführte Dampfmenge reduziert werden, um einen übermäßigen Austritt von Dampf aus dem Gargerät 1 zu vermeiden. Die reduzierte Heizleistung zeigt sich direkt in der geringeren Steigung des zeitlichen Temperaturverlaufs 34a nach der zweiten Temperatur T2 bzw. der Temperatur 38. Im weiteren Verlauf kann nach Erreichen einer Schwelltemperatur 35 die Heizleistung weiter reduziert werden, sodass die vorgesehene Gartemperatur erreicht wird, ohne ein übermäßiges Maß an Dampf 9 aus dem Gargerät 1 abzuführen. In bevorzugten Fällen wird die Heizleistung erst bei Erreichen einer vorgegeben oder einstellbaren Schwelltemperatur reduziert, die z.B. 80 °C betragen kann.

In allen Fällen kann bei einer höheren Beladung 41 mit maximaler Heizleistung bis zum Erreichen der Schwelltemperatur 35 oder einer höheren Temperatur 39 weiter geheizt werden, da bei hohen Beladungen 41 das im Garraum 2 vorhandene Gargut 21 die durch den Dampf 9 eingebrachte Heizleistung absorbieren kann, sodass kein Austritt von Dampf 9 aus dem Garraum 2 zu befürchten ist, bis die vorgesehene Gartemperatur 49 etwa erreicht wird. Bei einer geringeren Beladung 40 wird vorzugsweise die Heizleistung schon bei einer geringeren Temperatur 38 verringert, während bei einer höheren Beladung 41 die Heizleistung erst bei einer höheren Temperatur 39 reduziert wird.

Die zeitlichen Temperaturverläufe 34 bzw. 34a ergeben sich aus den Sensorsignalen 32 der Sensoreinrichtung 31 bzw. des Temperaturfühlers 11. Der zeitliche Temperaturverlauf 34 bzw. 34a stellt ein direktes Maß für die jeweilige Wärmekapazität 37 des Inhalts des Garraumes 2 dar.

In Figur 6 ist für das Beispiel aus Figur 5 neben den zeitlichen Temperaturverläufen 34 und 34a auch noch die entsprechende Heizleistung 36 bzw. 36a aufgetragen.

Zu Beginn des Garvorgangs wird in beiden Fällen mit maximaler Heizleistung gearbeitet, um soviel Dampf 9 wie möglich in den Garraum 2 einzubringen. Dementsprechend steigen die auch in Figur 6 abgebildeten Temperaturen entsprechend an. Bei einer geringen Beladung 40 kann bei Erreichen der Temperaturschwelle T2 die Heizleistung erheblich reduziert werden, bis bei Erreichen der Schwelltemperatur 35 die Heizleistung nochmals reduziert wird, um den Garprozess mit verminderter Leistung fortzusetzen. Bei einer geringen Beladung 40 kann folglich die Temperatur T2 als erste Schwelltemperatur 35a eingesetzt werden, während eine zweite Schwelltemperatur noch nahe der vorgesehenen Gartemperatur 49 vorgesehen sein kann.

Bei einer hohen Beladung 41 wird zunächst zu Beginn des Garvorgangs auch mit maximaler Heizleistung geheizt, um möglichst viel Dampf 9 in den Garraum 2 einzubringen. Durch die Steigung des zeitlichen Temperaturverlaufs 34 bzw. das daraus bestimmte Maß 33 für die Beladung ergibt sich, dass die maximale Heizleistung bis zum Erreichen einer weitaus höheren Schwelltemperatur 35 fortgesetzt werden kann, die nahe an der vorgesehenen Gartemperatur liegen kann und beispielsweise nur ein, zwei, drei oder vier Grad unterhalb der Seidentemperatur liegen kann. Erst bei Erreichen der Schwelltemperatur 35 wird die Heizleistung etwas gedrosselt und schließlich bei nahezu Erreichen der Gartemperatur wieder stark abgesenkt, sodass beispielsweise mit der gleichen Heizleistung der Garprozess fortgesetzt wird wie es bei einer geringen Beladung 40 der Fall ist.

In allen Fällen ist es möglich, dass die Heizleistung mehrstufig oder kontinuierlich angepasst wird. Es ist nicht nötig, dass die Heizleistung nur in ein, zwei oder drei Stufen angepasst wird. Möglich ist auch eine kontinuierliche oder quasi-kontinuierliche Anpassung der Heizleistung. Es ist auch möglich, zwei, drei, vier oder fünf oder mehr Schwelltemperaturen vorzusehen, bei denen die Heizleistung entsprechend reduziert oder erhöht wird.

Insgesamt wird durch das erfindungsgemäße Gargerät ein Gargerät 1 zur Verfügung gestellt, welches einfacher zu montieren ist, da die Baueinheit 10 idealerweise mit allen die Prozesssteuerung betreffenden Elementen versehen ist. Dadurch lässt sich die Fertigung und Montage vereinfachen. Außerdem erhält der Kunde den Vorteil, dass das Gerät einfacher zu reinigen ist. Gegebenenfalls kann noch ein Beleuchtungselement in die Baueinheit 10 integriert werden.

Dadurch, dass mehrere Dampfeinlassöffnungen 4 bis 7 auf mehreren Ebenen vorgesehen sind, kann eine homogene Dampfverteilung innerhalb des Garraumes 2 gewährleistet werden. Durch die seitliche Ausströmung des Dampfes 9 an der Rückwand 13 des Garraumes 2 wird eine besonders homogene Verteilung erzielt. Örtliche und zeitliche Temperaturunterschiede werden minimiert. Insbesondere kann ein gleichmäßiges Garen des eingebrachten Garguts 21 erreicht werden.

Gleichzeitig wird ein kostengünstiges Gargerät 1 zur Verfügung gestellt, welches auch den höchsten Ansprüchen genügt. Durch die Ausgestaltung der Dampfeinlassöffnungen 4 bis 7 als Düse 18 wird die Verteilung des Dampfes nochmals verstärkt.

Die unterschiedlich steuerbaren Dampfeinlassöffnungen 4 bis 7 an den verschiedenen Ebenen ermöglichen eine flexiblere Steuerung der Dampfzufuhr, die eine hohe Dampferzeugerleistung ermöglicht eine ausreichende Durchmischung des Garraums bewirkt.

Die Dampfauslassöffnungen 8 im unteren Bereich des Garraumes 2 führen dazu, dass der jeweils kühlste Bereich der Garraumatmosphäre aus dem Garraum 2 abgeleitet wird. Die relativ hohen Einströmgeschwindigkeiten des Dampfes 9 sorgen aufgrund der Massenträgheit der Atmosphäre auch nach dem Einströmen für eine dauerhafte Bewegung innerhalb des Garraumes 2, was eine Entmischung verhindert. Dadurch, dass der eingeleitete Dampf 9 wärmer und leichter ist, steigt dieser nach oben, während die schwerere und kältere Luft nach unten fällt. Dadurch wird eine homogenere Temperaturverteilung erreicht, sodass ungleichmäßige oder schlechte Garergebnisse vermieden werden können.

In der Aufheizphase wird in allen Fällen vorzugsweise mit maximal vorgesehener Dampfleistung beheizt, um die Aufheizphase möglich kurz zu halten.

Durch die Bestimmung eines Maßes 33 bzw. 33a für die Beladung des Garraumes 2 können die Aufheizzeiten sowohl bei großen als auch bei kleinen Beladungen kurz gehalten werden, ohne dass eine erhebliche Menge an Dampf aus dem Gerät 1 austritt. Insbesondere wird die Leistung in allen Fällen beispielsweise erst reduziert, wenn die Raumtemperatur größer 80 Grad C beträgt. Ein schnelles Durchschreiten des Temperaturbereiches zwischen 60 und 80 Grad reduziert den enzymatischen Abbau von Chlorophyll und reduziert damit die Gefahr einer unschönen Verfärbung des Lebensmittels.

Die Anordnung des Temperaturfühlers 11 an dem Dampfauslass 8 des Garraumes 2 ermöglicht eine deutliche bessere Regelung, sodass ein "Atmen" des Garraumes 2 erheblich reduziert und praktisch ganz vermieden werden kann. Insbesondere in Verbindung mit einer verbesserten Steuerung der Heizleistung kann ein besseres Garergebnis gewährleistet werden.

Der an der Dampfauslassöffnung 8 positionierte Temperaturfühler 11 befindet sich in dem durch die Dampfauslassöffnung 8 durchtretenden Gasstrom 43 und detektiert so bei einem Dampfüberschuss den heißen austretenden Dampf 9 und bei einem Dampfmangel, der zu einem Unterdruck im Garraum 2 führt, die kalte eintretende Luft, sodass sehr frühzeitig entsprechend entgegengesteuert werden kann. Durch eine feinfühlige Anpassung der Heizleistung an die aktuellen Gegebenheiten wird im dargestellten Ausführungsbeispiel erreicht, dass nach Erreichen der vorgesehenen Gartemperatur praktisch kein Temperaturunterschied mehr auftritt. Gleichzeitig wird dadurch der Energieverbrauch verringert, da aus dem Garraum 2 austretender Dampf 9 energetisch hochwertig ist und durch eine relativ große Wärmemenge ersetzt werden muss, was hier weitgehend vermieden wird.

Insgesamt wird ein kostengünstiges Gargerät 1 zur Verfügung gestellt, welches bessere Garergebnisse bei einem geringeren Energieverbrauch ermöglicht.

### Bezugszeichenliste

- 1: Gargerät
- 2: Garraum
- 3: Dampfquelle
- 4: Dampfeinlassöffnung
- 5: Dampfeinlassöffnung
- 6: Dampfeinlassöffnung
- 7: Dampfeinlassöffnung
- 8: Dampfauslassöffnung
- 9: Dampf
- 10: Baueinheit
- 11: Temperaturfühler
- 12: charakteristische Temperatur
- 13: Rückwand
- 14: Ebene
- 15: Ebene
- 16: Ebene
- 17: Ebene
- 18: Dampfdüse
- 19: unterer Bereich
- 20: Leuchtquelle
- 21: Speise, Gargut
- 21a: Speise, Gargut
- 22: Dampfführung
- 23: Garbehälter, Garblech
- 24: Aufnahmerand
- 25: Garebene
- 26: Garebene
- 27: Garebene
- 28: Halter
- 29: Dampfleitung
- 30: Steuereinrichtung
- 31: Sensoreinrichtung
- 32: Sensorsignal
- 33: Maß für die Beladung
- 33a: Maß für die Beladung
- 34: zeitlicher Temperaturverlauf
- 34a: zeitlicher Temperaturverlauf
- 35: Schwelltemperatur
- 35a: Schwelltemperatur
- 36: Heizleistung
- 36a: Heizleistung
- 37: Wärmekapazität
- 38: geringere Temperatur
- 39: höhere Temperatur
- 40: geringere Beladung
- 41: höhere Beladung
- 42: Strömungsweg
- 43: Gasstrom
- 44: Zwischenraum
- 45: Strahlrichtung
- 46: Bedienknopf
- 47: Anzeige
- 48: Zeitdauer
- 48a: Zeitdauer
- 49: Gartemperatur
- 50: Umgebung
- 51: Dampfkanal
- 52: Verengung
- 53: Dampfströmung
- 54: Wandung
- 55: Öffnung
- 100: Dampfgargerät
- T1: Temperatur
- T2: Temperatur

## Patentansprüche

1. Gargerät (1) mit wenigstens einem Garraum (2), der über wenigstens eine dem Garraum (2) zugeordnete Dampfquelle (3) beheizbar ist,
wobei an dem Garraum (2) wenigstens eine Dampfeinlassöffnung (4-7) vorgesehen ist, über welche von der Dampfquelle (3) erzeugter Dampf in den Garraum (2) eingebracht wird,
wenigstens eine Dampfauslassöffnung (8) vorgesehen ist, über welche der Garraum (2) mit der Umgebung (50) in Verbindung steht, und
wenigstens ein Temperaturfühler (11) zur Erfassung einer charakteristischen Garraumtemperatur (12) vorgesehen ist,
**dadurch gekennzeichnet, dass**
der Temperaturfühler (11) und die Dampfeinlassöffnungen (4-7) und die Dampfauslassöffnungen (8) an einer gemeinsamen Baueinheit (10) vorgesehen sind und
die gemeinsame Baueinheit (10) an der Rückwand des Garraumes (2) angeordnet ist und
der Temperaturfühler (11) in dem Strömungsweg (42) eines durch die Dampfauslassöffnung (8) durchtretenden Gasstroms (43) angeordnet ist.

2. Gargerät (1) nach Anspruch 1,
**dadurch gekennzeichnet,**
**dass** der Temperaturfühler (11) an der Dampfauslassöffnung (8) angeordnet ist.

3. Gargerät (1) nach Anspruch 1 oder 2,
**dadurch gekennzeichnet,**
**dass** der Temperaturfühler (11) in der Dampfauslassöffnung (8) angeordnet ist.

4. Gargerät (1) nach einem der vorhergehenden Ansprüche,
**dadurch gekennzeichnet,**
**dass** die Dampfauslassöffnung (8) im unteren Bereich des Garraumes (2) angeordnet ist.

5. Gargerät (1) nach einem der vorhergehenden Ansprüche,
**dadurch gekennzeichnet,**
**dass** der Temperaturfühler (11) außerhalb des Garraumes (2) angeordnet ist.

6. Gargerät (1) nach einem der vorhergehenden Ansprüche,
**dadurch gekennzeichnet,**
**dass** die Dampfauslassöffnung (8) den Garraum (2) von einem Zwischenraum (44) trennt, der mit der Umgebung (50) in Verbindung steht.

7. Gargerät (1) nach einem der vorhergehenden Ansprüche,
**dadurch gekennzeichnet,**
**dass** die Dampfeinlassöffnungen (4-7) auf mehreren Ebenen (14-17) höhenversetzt angeordnet sind, von denen wenigstens zwei Ebenen (14, 15) separat ansteuerbar sind.

8. Gargerät (1) nach einem der vorhergehenden Ansprüche,
**dadurch gekennzeichnet,**
**dass** an der gemeinsamen Baueinheit (10) die Dampfeinlassöffnungen (4-7) seitlich voneinander weg ausgerichtet sind.

9. Gargerät (1) nach einem der vorhergehenden Ansprüche,
**dadurch gekennzeichnet,**
**dass** wenigstens eine Dampfeinlassöffnung (4-7) als Dampfdüse (18) ausgebildet ist.

10. Verfahren zum Betreiben eines Gargerätes (1) gemäß einem der vorhergehenden Ansprüche, wobei das Gargerät (1) wenigstens einen Garraum (2) aufweist, der im Wesentlichen über wenigstens eine dem Garraum (2) zugeordnete Dampfquelle (3) beheizt wird, wobei der Garraum (2) über wenigstens eine Dampfauslassöffnung (8) mit der Umgebung (50) verbunden ist und wenigstens ein Temperaturfühler (11) eine charakteristische Garraumtemperatur (12) erfasst,
der Temperaturfühler (11) in dem Strömungsweg (42) eines durch die Dampfauslassöffnung (8) durchtretenden Gasstroms (43) angeordnet ist,
**dadurch gekennzeichnet, dass**
in einer Aufheizphase die Dampfquelle (3) dem Garraum (2) die maximale Heizleistung zuführt, wodurch zunächst ein möglichst starker Temperaturanstieg in dem Garraum (2) bewirkt wird,
und ein Maß (33, 33a) für die Beladung (40, 41) des Garraumes (2) bestimmt wird,
wobei bei einer geringeren Beladung (40) die Heizleistung bereits bei einer geringeren Temperatur (38) reduziert wird und bei einer höheren Beladung (41) die Heizleistung erst bei einer höheren Temperatur (39) reduziert wird.

11. Verfahren nach dem vorhergehenden Anspruch,
**dadurch gekennzeichnet,**
**dass** die Heizleistung der Dampfquelle (3) in Abhängigkeit von der charakteristischen Garraumtemperatur (12) gesteuert wird.

12. Verfahren nach einem der beiden vorhergehenden Ansprüche,
**dadurch gekennzeichnet,**
**dass** die Heizleistung in Abhängigkeit von den Schaltzyklen eingestellt wird.

13. Verfahren nach einem der drei vorhergehenden Ansprüche
**dadurch gekennzeichnet, dass** die Dampfauslassöffnung (8) im unteren Bereich des Garraumes (2) angeordnet ist wodurch der jeweils kühlste Bereich der Garraumatmosphäre aus dem Garraum (2) abgeleitet wird.

## Claims

1. Cooking appliance (1) comprising at least one cooking chamber (2) that can be heated by at least one steam source (3) associated with the cooking chamber (2),
at least one steam inlet opening (4-7) being provided in the cooking chamber (2), via which opening steam produced by the steam source (3) is introduced into the cooking chamber (2),
at least one steam outlet opening (8) being provided via which the cooking chamber (2) is connected to the surroundings (50), and
at least one temperature sensor (11) for detecting a characteristic cooking chamber temperature (12) being provided,
**characterised in that**
the temperature sensor (11) and the steam inlet openings (4-7) and the steam outlet openings (8) are provided in a combined unit (10), and the combined unit (10) is arranged on the rear wall of the cooking chamber (2), and the temperature sensor (11) is arranged in the flow path (42) of a gas flow (43) passing through the steam outlet opening (8).

2. Cooking appliance (1) according to claim 1,
**characterised in that**
the temperature sensor (11) is arranged at the steam outlet opening (8).

3. Cooking appliance (1) according to either claim 1 or claim 2,
**characterised in that**
the temperature sensor (11) is arranged in the steam outlet opening (8).

4. Cooking appliance (1) according to any of the preceding claims,
**characterised in that**
the steam outlet opening (8) is arranged in the lower region of the cooking chamber (2).

5. Cooking appliance (1) according to any of the preceding claims,
**characterised in that**
the temperature sensor (11) is arranged outside of the cooking chamber (2).

6. Cooking appliance (1) according to any of the preceding claims,
**characterised in that**
the steam outlet opening (8) separates the cooking chamber (2) from an intermediate space (44) that is connected to the surroundings (50).

7. Cooking appliance (1) according to any of the preceding claims,
**characterised in that**
the steam inlet openings (4-7) are arranged so as to be vertically offset on a plurality of planes (14-17), at least two planes (14, 15) of which can be controlled separately.

8. Cooking appliance (1) according to any of the preceding claims,
**characterised in that**
the steam inlet openings (4-7) are laterally oriented away from one another on the combined unit (10).

9. Cooking appliance (1) according to any of the preceding claims,
**characterised in that**
at least one steam inlet opening (4-7) is designed as a steam nozzle (18).

10. Method for operating a cooking appliance (1) comprising at least one cooking chamber (2) that is heated substantially by at least one steam source (3) associated with the cooking chamber (2), the cooking chamber (2) being connected to the surroundings (50) via at least one steam outlet opening (8), and at least one temperature sensor (11) detecting a characteristic cooking chamber temperature (12),
the temperature sensor (11) being arranged in the flow path (42) of a gas flow (43) passing through the steam outlet opening (8),
**characterised in that**
the steam source (3) supplies the maximum heating capacity to the cooking chamber (2) in a heating phase, which initially causes the temperature in the cooking chamber (2) to increase as sharply as possible, and a measure (33, 33a) for the load (40, 41) of the cooking chamber (2) is determined,
the heating capacity being reduced at a lower temperature (38) when the load (40) is lower, and the heating capacity only being reduced at a higher temperature (39) when the load (41) is higher.

11. Method according to the preceding claim,
**characterised in that**
the heating capacity of the steam source (3) is controlled depending on the characteristic cooking chamber temperature (12).

12. Method according to either of the two preceding claims,
**characterised in that**
the heating capacity is adjusted depending on the switching cycles.

13. Method according to any of the three preceding claims,
**characterised in that** the steam outlet opening (8) is arranged in the lower region of the cooking chamber (2), as a result of which the region of the cooking chamber atmosphere that is coolest in each case is conveyed out of the cooking chamber (2).

## Revendications

1. Appareil de cuisson (1), avec au moins un espace de cuisson (2) qui peut être chauffé par le biais d'au moins une source de vapeur (3) affectée à l'espace de cuisson (2),
dans lequel au moins une ouverture d'admission de vapeur (4-7) est prévue sur l'espace de cuisson (2), par le biais de laquelle la vapeur produite par la source de vapeur (3) est introduite dans l'espace de cuisson (2),
il est prévu au moins une ouverture d'évacuation de vapeur (8), par le biais de laquelle l'espace de cuisson (2) est en liaison avec l'environnement (50), et
il est prévu au moins une sonde de température (11) destinée à détecter une température d'espace de cuisson (12) caractéristique,
**caractérisé en ce que**
la sonde de température (11) et les ouvertures d'admission de vapeur (4-7) et les ouvertures d'évacuation de vapeur (8) sont prévues sur un module (10) commun et le module (10) commun est disposé sur la paroi arrière de l'espace de cuisson (2) et la sonde de température (11) est disposée sur le chemin d'écoulement (42) d'un flux de gaz (43) pénétrant dans l'ouverture d'évacuation de vapeur (8).

2. Appareil de cuisson (1) selon la revendication 1,
**caractérisé en ce que**
la sonde de température (11) est disposée sur l'ouverture d'évacuation de vapeur (8).

3. Appareil de cuisson (1) selon la revendication 1 ou 2,
**caractérisé en ce que**
la sonde de température (11) est disposée dans l'ouverture d'évacuation de vapeur (8).

4. Appareil de cuisson (1) selon l'une des revendications précédentes,
**caractérisé en ce que**
l'ouverture d'évacuation de vapeur (8) est disposée dans la zone inférieure de l'espace de cuisson (2).

5. Appareil de cuisson (1) selon l'une des revendications précédentes,
**caractérisé en ce que**
la sonde de température (11) est disposée à l'extérieur de l'espace de cuisson (2).

6. Appareil de cuisson (1) selon l'une des revendications précédentes,
**caractérisé en ce que**
l'ouverture d'évacuation de vapeur (8) réalise une séparation entre l'espace de cuisson (2) et un espace intermédiaire (44) qui est en liaison avec l'environnement (50).

7. Appareil de cuisson (1) selon l'une des revendications précédentes,
**caractérisé en ce que**
les ouvertures d'admission de vapeur (4-7) sont disposées en étant décalées en hauteur sur plusieurs plans (14-17) dont au moins deux plans (14, 15) peuvent être commandés séparément.

8. Appareil de cuisson (1) selon l'une des revendications précédentes,
**caractérisé en ce que**
sur le module (10) commun, les ouvertures d'admission de vapeur (4-7) sont orientées latéralement en étant éloignées les unes des autres.

9. Appareil de cuisson (1) selon l'une des revendications précédentes,
**caractérisé en ce que**
qu'au moins une ouverture d'admission de vapeur (4-7) est constituée en tant que buse de vapeur (18).

10. Procédé de fonctionnement d'un appareil de cuisson (1), avec au moins un espace de cuisson (2) qui est chauffé essentiellement par le biais d'une source de vapeur (3) affectée à l'espace de cuisson (2), dans lequel l'espace de cuisson (2) est relié à l'environnement (50) par le biais d'au moins une ouverture d'évacuation de vapeur (8), et au moins une sonde de température (11) détecte une température d'espace de cuisson (12) caractéristique,
la sonde de température (11) est disposée sur le chemin d'écoulement (42) d'un flux de gaz (43) pénétrant dans l'ouverture d'évacuation de vapeur (8),
**caractérisé en ce que**
dans une phase de chauffage, la source de vapeur (3) achemine la puissance de chauffe maximale à l'espace de cuisson (2), ce qui fait qu'une augmentation de température la plus forte possible est d'abord provoquée dans l'espace de cuisson (2), et une mesure (33, 33a) pour le chargement (40, 41) de l'espace de cuisson (2) est définie,
dans lequel, en présence d'un chargement (40) plus faible, la puissance de chauffe est réduite déjà en présence d'une température (38) plus faible et, en présence d'un chargement (41) plus élevé, la puissance de chauffe n'est réduite qu'en présence d'une température (39) plus élevée.

11. Procédé selon la revendication précédente,
**caractérisé en ce que**
la puissance de chauffe de la source de vapeur (3) est commandée en fonction de la température d'espace de cuisson (12) caractéristique.

12. Procédé selon l'une des deux revendications précédentes,
**caractérisé en ce que**
la puissance de chauffe est réglée en fonction des cycles de commande.

13. Procédé selon l'une des trois revendications précédentes,
**caractérisé en ce que** l'ouverture d'évacuation de vapeur (8) est disposée dans la zone inférieure de l'espace de cuisson (2), ce qui fait que la zone respectivement la plus froide de l'atmosphère de l'espace de cuisson est évacuée de l'espace de cuisson (2).
